# EUROPÄISCHE PATENTSCHRIFT

(11) **EP 1 060 047 B1**
(45) Veröffentlichungstag und Bekanntmachung des Hinweises auf die Patenterteilung: **11.09.2002**
(21) Anmeldenummer: 99903677.5
(22) Anmeldetag: 23.01.1999
(51) Int. Cl.: B22D 19/00, B21H 7/18, F02F 1/10

(54) **VERFAHREN ZUM HERSTELLEN EINES IN EIN LEICHTMETALL-KURBELGEHÄUSE EINER HUBKURBELMASCHINE EINZUGIESSENDEN ROHLINGS EINER ZYLINDERLAUFBUCHSE**
METHOD FOR PRODUCING A CYLINDER LINER BLANK TO BE CAST INTO A LIGHT-ALLOY CRANKCASE OF A RECIPROCATING ENGINE
PROCEDE POUR PRODUIRE UNE EBAUCHE DE CHEMISE DE CYLINDRE, A COULER DANS LE CARTER EN ALLIAGE LEGER D'UN MOTEUR A PISTON ALTERNATIF

(30) Priorität: 25.02.1998 DE 19807685
(43) Veröffentlichungstag der Anmeldung: 20.12.2000
(73) Patentinhaber: DaimlerChrysler AG, 70567 Stuttgart (DE)
(72) Erfinder: RÜCKERT, Franz, D-73760 Ostfildern (DE); STOCKER, Peter, D-71560 Sulzbach (DE)
(86) Internationale Anmeldenummer: EP9900445
(87) Internationale Veröffentlichungsnummer: WO99043457

(56) Entgegenhaltungen:
- EP-A- 0 532 331
- DE-A- 19 634 504
- US-A- 2 693 122
- US-A- 4 005 991

## Beschreibung

Die Erfindung betrifft ein Verfahren zum Herstellen eines in ein Leichtmetall-Kurbelgehäuse einer Hubkurbelmaschine einzugießenden Rohlings einer Zylinderlaufbuchse. Die Erfindung geht aus von einem Verfahren zum Herstellen eines in ein Leichtmetall-Kurbelgehäuse einer Hubkurbelmaschine einzugießenden Rohlings einer Zylinderlaufbuchse aus ebenfalls einer Leichtmetall-Legierung gemäß dem Oberbegriff des Anspruchs 1. Ein solches Verfahren ist beispielsweise in der DE 196 34 504 A1 der Anmelderin enthalten. Gegenüber dem Stand der Technik bringt das Verfahren dieser älteren Anmeldung zwar eine Verbesserung bekannter Verfahren, jedoch wird in der industriellen Technik grundsätzlich eine weitere Verbesserung nicht nur des Verfahrens, sondern auch des durch das Verfahren hergestellen Produkts angestrebt. Das Prinzip des mechanischen Aufrauhens vor dem Eingießen des Rohlings in das Leichtmetall-Gußteil stellt zwar grundsätzlich einen vorteilhaften Verfahrensschritt dar, jedoch bedarf dieser zur weiteren Optimierung des Verfahrens noch weiterer Verfeinerungen und Differenzierungen.

Die Aufgabe der Erfindung ist es demnach, das gattungsgemäß zugrundegelegte Verfahren dahingehend zu verbessern, daß eine noch höhere Anbindung des wenigstens einen Rohlings an das Leichtmetall-Kurbelgehäuse erreicht werden kann. Die separate Herstellung eines Rohlings und das Eingießen desselben in ein Leichtmetall-Kurbelgehäuse erfolgt in aller Regel deshalb, weil der Rohling aus einer anderen Leichtmetall-Legierung besteht als das Gußmaterial des Leichtmetall-Kurbelgehäuses.

Nur wenn die flächenmäßige Anbindung jeder Zylinderlaufbuchse an das Leichtmetall-Gußmaterial des Kurbelgehäuses gewährleistet ist, erreicht man später im Betrieb des mit diesem Kurbelgehäuse ausgerüsteten Motors besondere Vorteile. Es sind dies vor allen Dingen ein gleichmäßiger Wärmeübergang, ein gleichmäßiges Temperaturprofil des Zylinderlaufbüchse in Umfangs- und in Axialrichtung sowie ein geringerer thermisch bedingter Zylinderverzug. Außerdem sind damit noch eine ganze Anzahl weiterer Vorteile verbunden, die sich vor allen Dingen aus der genannten DE-A1 ergeben hat.

Die Aufgabe wird erfindungsgemäß durch die Merkmale des Anspruchs 1 gelöst.

Kernpunkt bei der Verbesserung des Verfahrens in dem vorgeschlagenen Verfahren ist allgemein eine Aufrauung der mit dem Gussmaterial in unmittelbaren Kontakt kommenden Oberfläche des oder der Rohlinge. Gemäß Anspruch 1 wird detailliert vorgeschlagen, dass man das Oberflächenaktivieren durch Rollieren mittels einer scharfkantig aufgerauten Rolle oder Walze aus einem harten Werkstoff durchführt, die beim Abrollen auf der Oberfläche den Rohling aufraut. Als günstig hat sich dabei ein Sticheln mittels wenigstens eines, vorzugsweise mehrerer, gleichzeitig zum Einsatz gelangender scharfkantig spitzer, perkussierend angetriebener Stichel aus einem harten Werkstoff erwiesen, mittels dessen das Oberflächenaktivieren durchgeführt wird, wobei die Stichel bei ihrem Auftreffen auf der Oberfläche den Rohling aufrauen. Das Oberflächenaktivieren erfolgt in Gegenwart eines Überschusses von feinen Kupferpartikeln an der zu behandelnden Oberfläche, die zumindest zum Teil durch die mechanische Oberflächenbehandlung in die Oberfläche des Rohlings eingedrückt und so mechanisch implantiert werden. Die Kupferpartikel begünstigen ein Anschmelzen der behandelten Oberflächenpartien beim Umguss. Mit einer vollflächigen Verkupferung wird prozesssicher ein 100 %-vollflächiges, stoffschlüssiges Angießen erreicht.

Für die nach den erfindungsgemäßen Verfahrensschritten hergestellten Rohlinge und damit auch für das Endprodukt, nämlich das Leichtmetall-Kurbelgehäuse mit eingegossenen Laufbuchsen, ist es im Hinblick auf die angestrebte Qualität und die erwünschten Vorteile besonders wichtig, dass die erzielte Oberflächenaktivierung bis zum Eingießen der Rohlinge erhalten bleibt und nicht etwa auf dem Weg in die Gussform wieder verschlechtert oder gar verloren geht. Um dies zu gewährleisten, werden die Rohlinge nach dem Oberflächenaktivieren oberflächenschonend behandelt und an der behandelten Oberfläche manuell nicht berührt. Die Rohlinge werden dabei direkt oder indirekt nur an unbehandelten Oberflächen angefasst. In vorteilhafter Weise werden sie zum Handhaben nur mittels metallischer Greifsysteme angefasst, welche die Teile an möglichst wenigen, kleinflächigen Stellen, vorzugsweise lediglich drei Stellen berühren. An diesen möglichst wenigen, kleinflächigen Stellen, an denen die Greifersysteme mit der behandelten Oberfläche der Rohlinge in Berührung kommen, bestehen die Greifersysteme aus Kupfer.

Die Erfindung wird anhand eines in der Zeichnung dargestellten Ausführungsbeispiels nachfolgend noch erläutert. Dabei zeigen:
- Figur 1: eine partielle Schnitt-Ansicht einer Hubkolbenmaschine mit eingegossener Zylinderlaufbüchse,
- Figur 2: das Rohteil der Zylinderlaufbüchse für die Hubkolbenmaschine nach Figur 1 in Einzeldarstellung,
- Figur 3: den Verlauf der Anbindung über die Zeit gesehen,
- Figur 4: den Verlauf der Deckschichtstärke ebenfalls über die Zeit gesehen.

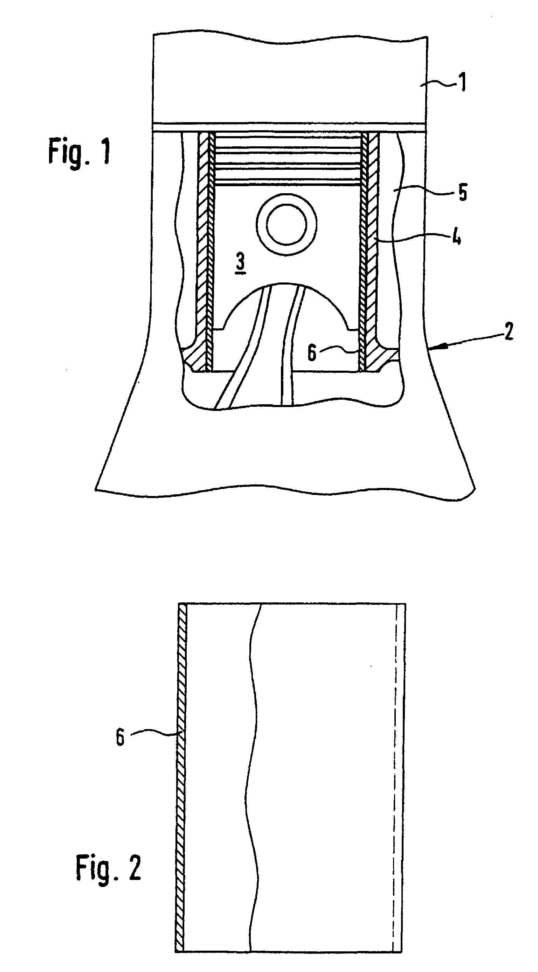

Die in Figur 1 speziell dargestellte Hubkolbenmaschine enthält ein Kurbelgehäuse 2 aus Druckguss in der nach oben freistehende Zylindermäntel 4 (in sogenannter open-deck-Bauweise) zur Aufnahme einer Zylinderlaufbüchse 6 angeordnet sind, in denen ein Kolben 3 auf und ab beweglich geführt ist. Oben auf dem Kurbelgehäuse 2 ist unter Zwischenfügung einer Zylinderkopfdichtung ein Zylinderkopf 1 mit den Einrichtungen für eine Ladungswechsel und die Ladungszündung angebracht. Innerhalb des Kurbelgehäuses ist um den Zylindermantel 4 herum ein Hohlraum zur Bildung eines Wassermantels 5 für die Zylinderkühlung vorgesehen.

Die Zylinderlaufbüchse 6 wird zuvor als Einzelteil nach einem hier nicht näher interessierenden Verfahren in einer Aluminium/Silizium-Legierung hergestellt, dann in der vorstehend beschriebenen Weise durch das erfindungsgemäße Verfahren verbessert und schließlich in das Kurbelgehäuse 2 eingegossen, sowie gemeinsam mit dem Kurbelgehäuse fertig bearbeitet.

Wichtig beim Eingießen der Zylinderlaufbüchse in das Kurbelgehäuse ist, dass auf einem möglichst großen Flächenanteil eine gute ungestörte stoffschlüssige Verbindung zwischen Büchsenwerkstoff und Gehäusewerkstoff zustande kommt. Dies wird gewährleistet durch die beschriebene Aufrauung und weitere Behandlung der Rohlingsoberfläche gemäß den vorstehenden Ausführungen.

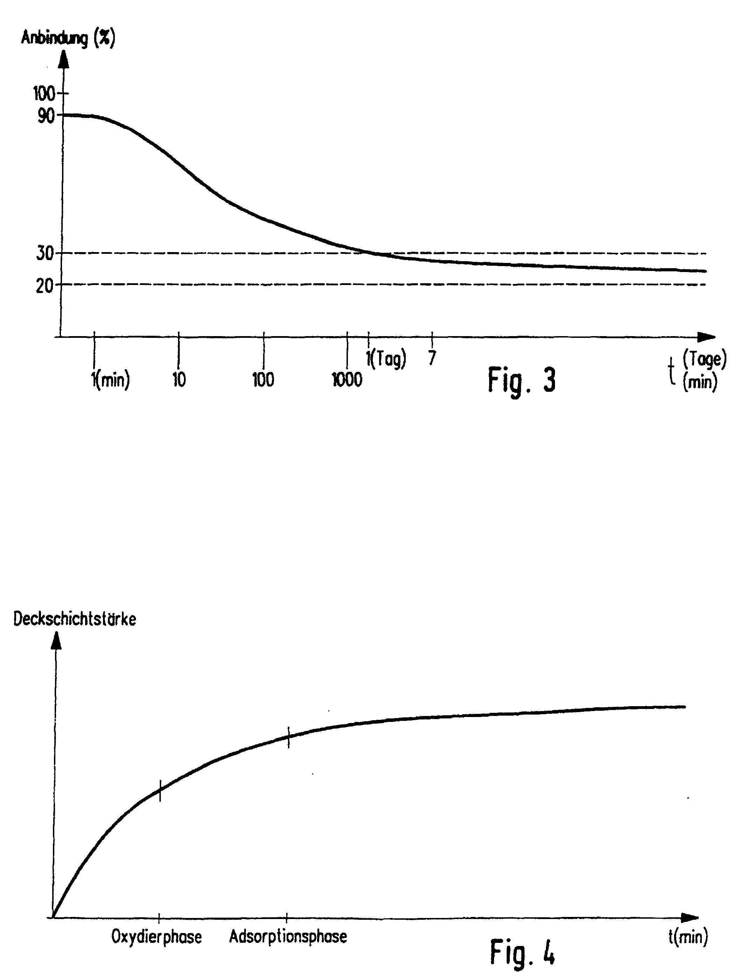

Aus Figur 3 ergibt sich, dass die Anbindung in der Größenordnung von 90 % liegt, wenn man das Vergießen unmittelbar nach der mechanischen Oberflächenaktivierung durchführt. Etwa nach einem Tag liegt die Anbindung nur noch in der Größenordnung von 30 %. Daraus resultiert, dass es für das Verfahren von Vorteil ist, wenn die Zeitspanne zwischen dem Oberflächenaktivieren und dem Umgießen der Bauteile weniger als etwa 5 Stunden beträgt. Der Fertigungsprozess muss demnach so gesteuert werden, dass diese Maximalzeit nicht überschritten, besser aber wesentlich unterboten wird. Aus der Zeichnung ergibt sich nämlich, dass die Anbindung mit zunehmender Zeit immer weiter abnimmt, weswegen, wie gesagt, eine möglichst starke Unterschreitung der genannten Maximalzeit anzustreben ist. Von besonderem Vorteil ist es dabei, wenn das Oberflächenaktivieren unmittelbar vor dem Umgießen der Rohlinge erfolgt und die Zeitspanne zwischen dem Oberflächenaktiveren und dem Umgießen etwa der Taktzeit des Umgießprozesses entspricht.

So wie die Anbindung mit zunehmender Zeit abnimmt, erfolgt eine Erhöhung der Deckschichtstärke auf einen gewissen Maximalwert. An die Oxidierungsphase, die in kurzer Zeit zu einer guten Deckschichtstärke führt, schließt sich die Adsorptionsphase an, in welcher die Deckschicht nochmals entscheidend zulegt. Anschließend erfolgt lediglich noch eine geringe Deckschichtstärkenzunahme.

## Patentansprüche

1. Verfahren zum Herstellen von aus einer Leichtmetall-Legierung bestehenden Rohlingen einer Zylinderlaufbüchse, die in ein Leichtmetall-Kurbelgehäuse einer Hubkolbenmaschine einzugießen sind, bei dem zunächst ein rohrförmiges Rohteil hergestellt und auf Sollform sowie Sollmaß bearbeitet wird und bei dem die vom Werkstoff des Leichtmetall-Kurbelgehäuses zu umgießende, außenseitige Oberfläche des Rohlings durch mechanisches Bearbeiten aufgeraut, insbesondere pyramidenähnlich oder lanzettartig aufgeschülpt oder aufgeworfen und die Oberfläche des einzugießenden Rohlings angußtechnisch aktiviert wird,
**dadurch gekennzeichnet,**
**dass** das Oberflächenaktivieren durch Rollieren mittels einer scharfkantig gerauten Rolle oder Walze aus einem harten Werkstoff durchgeführt wird, die bei ihrem Abrollen auf der Oberfläche den Rohling aufrauen, dass das mechanische Oberflächenaktivieren in Gegenwart eines Überschusses von feinen Kupferpartikeln an der zu behandelnden Oberfläche erfolgt, die zumindest zum Teil durch die mechanische Oberflächenbehandlung in die Oberfläche des Rohlings eingedrückt und so mechanisch implantiert werden, und dass das Oberflächenaktivieren unmittelbar vor dem Umgießen der Rohlinge erfolgt und die Zeitspanne zwischen dem Oberflächenaktivieren und dem Umgießen etwa der Taktzeit des Umgießprozesses entspricht.

2. Verfahren nach Anspruch 1,
**dadurch gekennzeichnet,**
**dass** die Rohlinge nach dem Oberflächenaktivieren zum Handhaben nur mittels metallischer Greifsysteme angefasst werden, welche an den möglichst wenigen, kleinflächigen Stellen, mit denen sie mit der behandelten Oberfläche der Rohlinge in Berührung kommen, aus Kupfer bestehen.

## Claims

1. A process for the manufacture of blanks of a cylinder liner made of a light metal alloy to be integrally cast in a light metal crankcase of a reciprocating engine in which at least one tubular blank is manufactured and processed to the correct reference shape and dimensions and in which the external surface of the blank to be integrally cast with the material of the light metal crankcase is roughened by means of mechanical treatment, in particular scabbed or gouged into pyramid or lanceolate forms and the surface of the blank to be cast is activated by means of joint casting technology,
**characterised in that**
the activation of the surface by means of rolling is carried out with a sharp-edged, roughened roller or drum made of a hard material which roughens the blank as it rolls over the surface, that the mechanical surface activation takes place in the presence of a surplus of fine copper particles on the surface to be treated at least some of which are pressed into the surface of the blank and thus mechanically implanted by the mechanical surface treatment, and that the surface activation takes placed immediately prior to the integral casting of blanks and the time between the surface activation and integral casting corresponds to approximately the cycle time of the integral casting process.

2. A process in accordance with claim 1,
**characterised in that**
after surface activation, the blanks are handled only by metal gripper systems which are made of copper at the very few, small surface area points at which they come into contact with the treated surfaces of the blanks.

## Revendications

1. Procédé de fabrication d'ébauches de chemise de cylindre constituées d'un alliage de métal léger, qui sont destinées à être insérées par coulée dans le carter de vilebrequin en métal léger d'une machine à piston à mouvement alternatif, dans lequel on fabrique tout d'abord une ébauche tubulaire et on l'usine pour obtenir une forme et une dimension prescrites et dans lequel, par un usinage mécanique, on rend rugueuse, en particulier par formation de protubérances ou accumulation de matières à la façon de pyramides ou sous forme de lancettes, la surface extérieure de l'ébauche, qui, à la coulée sera noyée par le matériau du carter de vilebrequin en métal léger, et, pour une technique de jonction par coulée, on active la surface de l'ébauche à couler dans le carter, **caractérisé par le fait que** l'on procède à l'activation de surface par un roulage au moyen d'un rouleau ou d'un cylindre rugueux, à arêtes vives, en un matériau dur, qui, lors de son roulement sur la surface, rend rugueuse l'ébauche, que l'activation mécanique de la surface se fait en présence d'un excédent, sur la surface à traiter, de fines particules de cuivre qui s'impriment et s'implantent mécaniquement, au moins partiellement, dans la surface de l'ébauche par suite du traitement mécanique de surface et que l'activation de surface se fait immédiatement avant que les ébauches soient noyées à la coulée et que le temps qui s'écoule entre l'activation de surface et l'instant où les ébauches sont noyées à la coulée correspond à peu près à la cadence du processus de coulée.

2. Procédé selon la revendication 1, **caractérisé par le fait qu'**après l'activation de surface, pour manipuler les ébauches, on ne les saisit qu'au moyen de systèmes de saisie métalliques qui sont constitués de cuivre aux endroits, le moins nombreux possible, à plus petite surface possible, par où ils viennent en contact avec la surface traitée des ébauches.
